# EUROPEAN PATENT APPLICATION

(11) **EP 2 878 793 A2**
(43) Date of publication of application: **03.06.2015**
(21) Application number: 14194442.1
(22) Date of filing: 24.11.2014
(51) Int. Cl.: F02D 29/06

(54) **Engine control apparatus and engine control method**

(30) Priority: 27.11.2013 JP 2013245386
(71) Applicant: Toyota Jidosha Kabushiki Kaisha, Toyota-shi, Aichi-ken 471-8571 (JP)
(72) Inventor: Horitake, Sunao, Aichi-ken,, 471-8571 (JP)
(74) Representative: Kuhnen & Wacker

(57) **Abstract**

An engine control apparatus controls an engine (10) that drives a vehicle, the vehicle including: a power generator (12) that is driven by the engine (10), wherein a power generation voltage generated by the power generator (12) is variable; and an electric load (50) that is connected to the power generator (12) and driven with an electric power supplied by the power generator (12), wherein a current flowing through the electric load (50) increases as a voltage applied to the electric load (50) increases. The engine control apparatus includes a control unit (30) that stops the engine (10) in response to an engine stop request for stopping the engine (10) and increases the power generation voltage to a voltage higher than the power generation voltage in a normal case at least before the control unit (30) starts stopping the engine (10).

## Description

### BACKGROUND OF THE INVENTION

### 1. Field of the Invention

The invention relates to an engine control apparatus and engine control method that perform control for stopping rotation of an engine.

### 2. Description of Related Art

In the conventional vehicles, such as vehicles (hereinafter called as idle stop vehicles) having a start-stop function, various engine stop controls have been performed for respective advantages to be obtained during the stop of the engine.

In Japanese Patent Application Publication No. 2012-082697 (JP-A-2012-082697), it is described that, when the engine is stopped according to the idle stop function, a load of an alternator is controlled such that an crank angle at the time of stoppage of the engine rotation is controlled to be within a the crank angle range appropriate for restarting the engine in order to improve the engine startability in restarting the engine.

The engine is generally designed to have a so-called resonance point in a rotation speed range that is equal to or lower than an idle rotation speed. When the thus designed engine is stopped, large vibration and noise occur since the engine rotation speed always passes through the rotation speed corresponding to the resonance point in the rotation speed range that is equal to or lower than the idle rotation speed. Particularly in the idle stop vehicle in which the engine is repeatedly stopped and restarted, if it takes long time before the engine rotation is stopped when the engine is stopped, the large vibration and noise may continue for a long time and make the occupant feel uncomfortable.

In addition, if it takes long time before the engine rotation is stopped when the engine is stopped, a control process to be performed in the vehicle after the engine is stopped may not started smoothly. In the idle stop vehicle, for example, when the engine is required to be started shortly after the engine is stopped, such as when the engine is stopped at a stop sign, an engine start control may not be started immediately and the occupant may hold an uncomfortable feeling if it takes long time before the engine rotation is stopped when the engine is stopped.

### SUMMARY OF THE INVENTION

The invention provides an engine control apparatus and engine control method that shorten the time before the engine rotation is stopped when the engine is stopped, and thereby suppress the uncomfortable feeling held by the occupant due to the noise and vibration and smoothly starts the control process to be performed after the engine is stopped.

A first aspect of the invention relates to an engine control apparatus for controlling an engine that drives a vehicle, the vehicle including: a power generator that is driven by the engine, wherein a power generation voltage generated by the power generator is variable; and an electric load that is connected to the power generator and driven with an electric power supplied by the power generator, wherein a current flowing through the electric load increases as a voltage applied to the electric load increases. The engine control apparatus includes a control unit that stops the engine in response to an engine stop request for stopping the engine and increases the power generation voltage to a voltage higher than the power generation voltage in a normal case at least before the control unit starts stopping the engine.

A second aspect of the invention relates to an engine control method for controlling an engine that drives a vehicle, the vehicle including: a power generator that is driven by the engine, wherein a power generation voltage generated by the power generator is variable; and an electric load that is connected to the power generator and driven with an electric power supplied by the power generator, wherein a current flowing through the electric load increases as a voltage applied to the electric load increases. The engine control method includes: stopping the engine in response to an engine stop request for stopping the engine; and increasing the power generation voltage to a voltage higher than the power generation voltage in a normal case at least before the stopping of the engine is started.

According to the aspects of the invention, it is possible to shorten the time before the engine rotation is stopped when the engine is stopped, and thereby suppress the uncomfortable feeling held by the occupant due to the noise and vibration and smoothly start the control process to be performed after the engine is stopped.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram that shows an example configuration of a vehicle including an engine control apparatus;
FIG. 2 is a flowchart that shows an example of a control process performed by the engine control apparatus; and
FIGs. 3A and 3B are timing diagrams that illustrate an operation for stopping an engine performed by the engine control apparatus.

### DETAILED DESCRIPTION OF EMBODIMENTS

Hereinafter, an embodiment for carrying out the invention is described with reference to drawings.

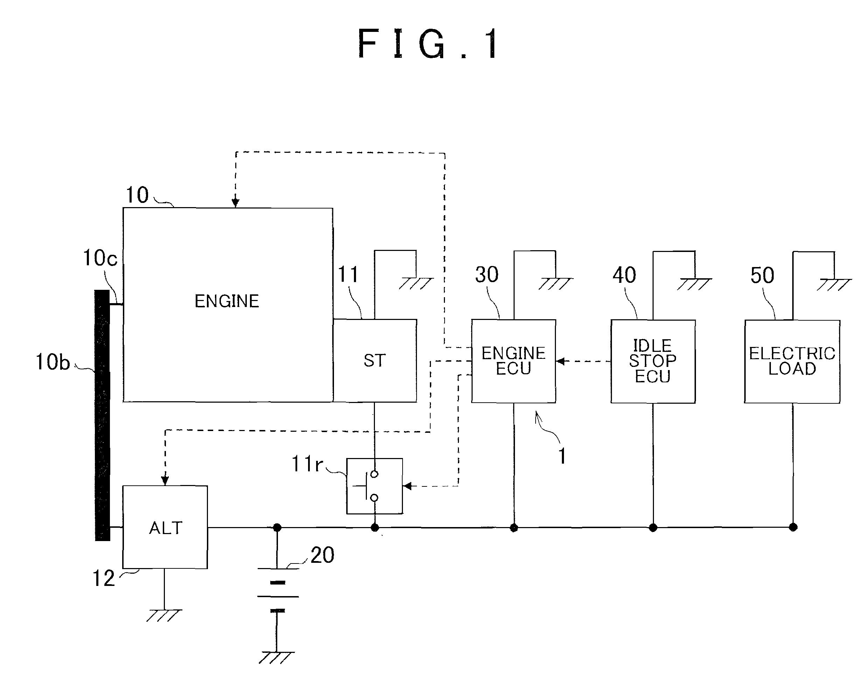

FIG. 1 is a block diagram that shows an example configuration of a vehicle including an engine control apparatus 1 according to the embodiment. The vehicle includes an engine 10 as a drive power source and has a so-called start-stop function for automatically stopping and restarting the engine 10.

When the engine 10 is stopped according to the idle stop function or a driver's operation for turning off an ignition switch, the engine control apparatus 1 according to the embodiment controls an operation for stopping the engine 10.

The vehicle includes the engine 10, a starter 11, an alternator (power generator) 12, a battery 20, an engine electronic control unit (ECU) 30, an idle stop ECU 40, and an electric load 50. The engine ECU 30 functions as a control unit of the engine control apparatus 1 according to the embodiment.

The starter 11 serves as a starter device that starts the engine 10. The starter 11 is driven with electric power supplied from the battery 20 to be described later.

The alternator 12 serves as a direct-current (DC) power generator driven with power supplied from the engine 10. The alternator 12 may be constituted by an alternating-current (AC) power generator and a rectifier that converts three-phase AC electric power output from the AC power generator into DC electric power. The alternator 12 generates the electric power using the power of the engine 10 transmitted from a clank shaft 10c via a belt 10b. The alternator 12 includes a regulator. The regulator controls a power generation control current (a field current that flows through a rotor coil of the alternator 12) to control a power generation voltage to be generated by the alternator 12. The power generation voltage of the alternator 12 is set according to an instruction from the engine ECU 30, and may be set to a value between 12 V to 16V.

The battery 20 is connected to the starter 11, the engine ECU 30, the idle stop ECU 40, and the electric load 50. The battery 20 serves as an electric storage device capable of supplying the electric power to the devices connected thereto. A lead-acid battery may be used as the battery 20. The rated voltage (voltage across the terminals) of the battery 20 is, for example, about 12 V. The battery 20 is also connected to the alternator 12 and is charged with the electric power generated by the alternator 12.

The engine ECU 30 is an electronic control unit that controls the engine 10. Specifically, the engine ECU 30 may be constituted by a microcomputer and perform various control processes through execution of the respective programs stored in a Read-Only Memory (ROM), in a Central Processing Unit (CPU). The engine ECU 30 may control a fuel injector (for example, a fuel injection timing and fuel injection amount) of the engine 10, an ignition plug (for example, an ignition timing), and an intake valve and exhaust valve (for example, valve timings) based on information about an accelerator operation amount (throttle opening degree), a vehicle speed, a clank angle, a cam angle, a engine rotation speed, and the like.

The engine ECU 30 controls a relay 11r provided on an electric power supply path from the battery 20 to the starter 11, and thereby drives the starter 11 and starts the engine 10. For example, when the driver turns on an ignition switch, not shown in the drawings, an on signal indicating turning-on of the ignition switch (corresponding to an engine start request for starting the engine) is input to the engine ECU 30. In response to the on signal, the engine ECU 30 energizes the relay 11r and thereby starts the engine 10. On the other hand, when the driver turns off the ignition switch, an off signal indicating turning-off of the ignition switch (corresponding to an engine stop request for stopping the engine) is input to the engine ECU 30. In response to the off signal, the engine ECU 30 stops fuel supply and thereby stops the engine 10.

The engine ECU 30 receives the engine stop request output from the idle stop ECU 40, which will be described later, and in response to the engine stop request, stops the fuel supply and thereby stops the engine 10. The engine ECU 30 receives the engine start request output from the idle stop ECU 40, and in response to the engine start request, controls the relay 11r to drive the starter 11 and thereby starts the engine 10. The engine ECU 30 may control engine stop or engine start in an idle stop operation in this manner.

In some cases, such as when fuel vapor accumulated in a canister needs to be purged or when a position of the cam at the time of the engine stop is designated in the engine 10 including a Variable Valve Timing (VVT) mechanism, the engine ECU 30 is not allowed to stop the engine 10 immediately after receiving the engine stop signal (including the off signal described above). Thus, the engine ECU 30 determines, in response to the engine stop request, whether the engine 10 is allowed to be stopped, and starts stopping the engine 10 after the engine ECU 30 determines that the engine 10 is allowed to be stopped.

The engine ECU 30 controls the power generation voltage of the alternator 12 via the regulator of the alternator 12. Specifically, the engine ECU 30 outputs an instruction indicating the power generation voltage to the regulator of the alternator 12, and the regulator performs duty control of the field current according to the output instruction to control the power generation voltage. For example, in a normal case, the engine ECU 30 output an instruction for maintaining a substantially constant power generation voltage (for example, 12V) to the alternator 12 (regulator). Based on the instruction, the regulator maintains the substantially constant power generation voltage by increasing or reducing the field current according to the rotation speed of the engine 10. This control makes it possible for the devices having the rated voltage of 12V, such as the engine ECU 30, the idle stop ECU 40, and the electric load 50, to operate normally. When the vehicle decelerates, the engine ECU 30 may output to the alternator 12 (regulator) an instruction for increasing the power generation voltage to a voltage (for example, 14V) higher than a power generation voltage to be generated in the normal case. Then, based on the instruction, the regulator may increase the field current to increase the power generation voltage to the voltage (for example, 14V) higher than the power generation voltage in the normal case. According to this control, it is possible to increase the power generation voltage to the voltage above the voltage across the terminals of the battery 20. As a result, the battery 20 can be effectively charged with regenerative electric power generated by the alternator 12 during deceleration. When the engine ECU 30 stops the engine 10 in response to the engine stop request (including the off signal), the engine ECU 30 may increase the power generation voltage of the alternator 12 to a voltage (for example, 14V) higher than the power generation voltage in the normal case at least before the engine ECU 30 starts stopping the engine 10 (fuel supply to the engine 10). Detailed process of control performed by the engine ECU 30 when the engine 10 is stopped will be described later along with its operation and advantages.

As described above, the power generation voltage of the alternator 12 is basically controlled to be substantially constant at a voltage corresponding to the rated voltage in order that the various ECUs and the electric load to be supplied with the electric power operates normally. Hereinafter, a "normal case" is defined as a case in which the power generation voltage of the alternator 12 is maintained substantially constant in relation to the various ECUs and the electric load connected to the alternator 12.

The idle stop ECU 40 is an electronic control unit that performs an idle stop control on the vehicle. The idle stop ECU 40 determines whether a predetermined engine stop condition is satisfied, and outputs the engine stop request to the engine ECU 30 when it is determined that the engine stop condition is satisfied. The idle stop ECU 40 may determine whether the engine stop request is satisfied when the idle stop ECU 40 determines that a pressure (hereinafter referred to as a MC pressure) in a master cylinder is equal to or higher than a predetermined depression pressure (that is, a brake pedal depression amount is equal to or higher than a predetermined amount). In addition, the idle stop ECU 40 determines whether a predetermined engine start condition is satisfied, and outputs the engine start request to the engine ECU 30 when it is determined that the engine start condition is satisfied. The idle stop ECU 40 may determine whether the engine start condition is satisfied when the idle stop ECU 40 determines that the MC pressure is equals to or lower than a predetermined release pressure (that is, the brake pedal is released). Each of the engine stop condition and the engine start condition may respectively include at least one of conditions relating to the rotation speed of the engine 10, a coolant temperature, a vehicle speed, the MC pressure, a door courtesy switch, and a current, voltage, and temperature of the battery 20. The engine stop condition may include a condition that an estimated state of charge (SOC) calculated using, for example, a current and voltage of the battery 20 is equal to or higher than a predetermined rate. The engine start condition may include a condition that the door courtesy switch is on (that is, the door is closed).

Functions of the engine ECU 30 and the idle stop ECU 40 may be implemented by hardware, software, firmware, or any combination thereof. The partial or whole function of each of the engine ECU 30 and the idle stop ECU 40 may be implemented by another ECU. Each of the engine ECU 30 and the idle stop ECU 40 may implement the partial or whole function of another ECU. For example, the partial or whole function of the idle stop ECU 40 may be implemented by the engine ECU 30.

The electric load 50, connected to the alternator 12 and the battery 20, is driven with the electric power supplied by the alternator 12 and the battery 20. A current flowing through the electric load 50 increases as a voltage applied to the electric load 50 increases. The electric load 50 may include electric equipment such as headlamps, wipers, an air conditioner, audio equipment, and meters.

Next, an operation of the engine control apparatus 1, particularly a control process performed by the engine control apparatus 1 when the engine 10 is stopped.

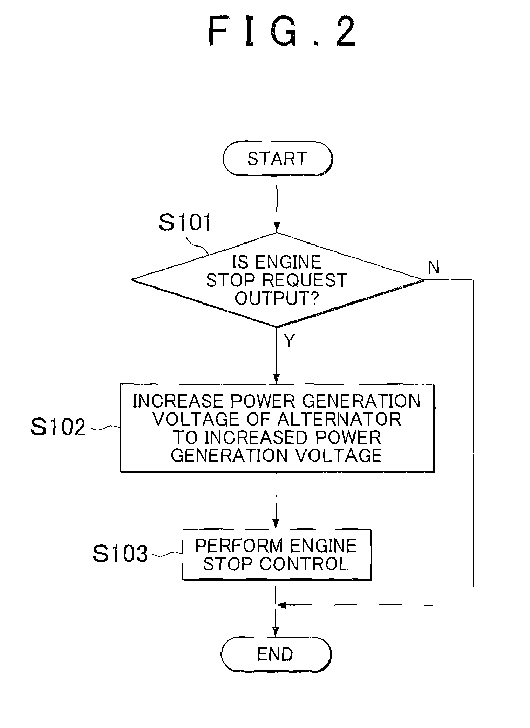

FIG. 2 is a flowchart that shows an example of the control process performed by the engine control apparatus 1 (i.e. the engine ECU 30) when the engine 10 is stopped. This control process is performed at predetermined time intervals after the ignition switch is turned on until the ignition switch is turned off in the vehicle in which the engine control apparatus 1 is provided.

First, in step S101, the engine ECU 30 determines whether the engine stop request (including the engine stop request from the idle stop ECU 40 and the off signal from the ignition switch) has been received. When it is determined that the engine stop request has not been received, the current process is terminated. When it is determined that the engine stop request has been received, the process proceeds to step S102.

In step S102, the engine ECU 30 sets the power generation voltage of the alternator 12 at a voltage (increased power generation voltage) higher than a power generation voltage (normal power generation voltage) to be generated in the normal case. Specifically, as described above, in response to the instruction from the engine ECU 30 for increasing the power generation voltage, the regulator of the alternator 12 controls the field current to vary the power generation voltage of the alternator 12 such that the power generation voltage is increased to the voltage above the normal power generation voltage. Then, the process proceeds to a step S103. In the step S102, in a case where the alternator 12 generates the electric power with the normal power generation voltage (equal to, for example, the rated voltage of the electric load) of 12V, the engine ECU 30 may increase the power generation voltage up to 14V in response to the engine stop request output from the idle stop ECU 40.

In the step S103, the engine ECU 30 performs control (engine stop control) for stopping the engine 10. Specifically, the engine ECU 30 performs (at a predetermined time) control for stopping fuel supply to each cylinder of the engine 10, as described above. As a result, the engine 10 in which the fuel supplied is stopped consumes kinetic energy due to friction losses occurring inside the engine 10, pumping losses occurring in each cylinder of the engine 10, and the like and inertially rotates several times before the engine 10 is finally stopped.

Next, operation of the control process performed by the engine control apparatus 1 (i.e. the engine ECU 30) will be explained in detail.

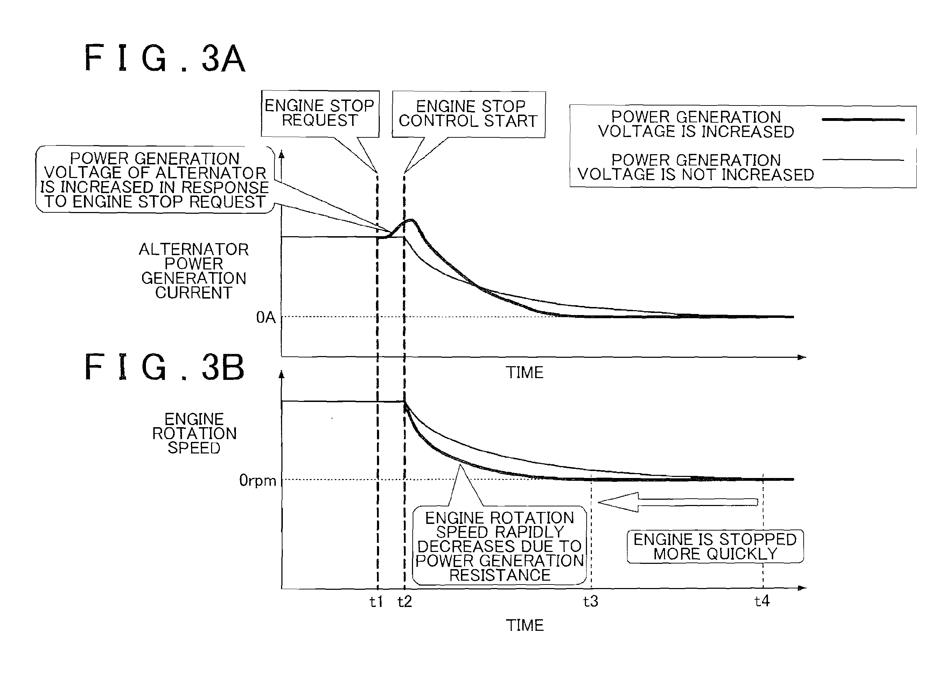

FIGs. 3A and 3B are timing diagrams that illustrate an example of operation for stopping the engine 10 performed by the engine control apparatus 1 (i.e., the engine ECU 30). Specifically, FIGs. 3A and 3B show time variations in a power generation current flowing through the alternator 12 and the rotation speed of the engine 10 during a period of time including partial periods before and after the engine 10 is stopped. FIG 3A in which the ordinate axis represents the power generation current of the alternator 12 while the abscissa axis represents time shows the time variation in the power generation current of the alternator 12. FIG. 3B in which the ordinate axis represents the rotation speed of the engine 10 while the abscissa axis represents time shows the time variation in the rotation speed of the engine 10. The time variations in an operation (corresponding to the step S102 in FIG. 2, a case in which the power generation voltage is increased when the engine 10 is stopped) for stopping the engine 10 performed by engine control apparatus 1 according to the embodiment are indicated by bold solid lines. In addition, as a comparative example, the time variations in a case in which the power generation voltage is not increased when the engine 10 is stopped (and the normal power generation voltage is maintained) are indicated by normal solid lines. Here, the operation when the engine 10 is stopped according an idle stop function is explained with reference to FIGs. 3A and 3B. Operation and advantages when the engine 10 is stopped in response to a driver's operation for turning off the ignition switch are similar to those in the above case, and thus the explanation thereof will be omitted.

As shown in FIGs. 3A and 3B, until the engine stop request is output at time t1, the power generation voltage of the alternator 12 is maintained substantially constant at the normal power generation voltage (for example, 12V) and the constant power generation current corresponding to the electric load 50 connected to the alternator 12 flows through the alternator 12. At this time, the engine 10 rotates at substantially constant idle rotation speed.

At the time t1, the idle stop ECU 40 outputs the engine stop request upon satisfaction of the engine stop condition. Then, the engine ECU 30, upon receiving the engine stop request, follows the steps S101 to S102 in FIG. 2 and increases the power generation voltage of the alternator 12 to the increased voltage. In this example, the power generation voltage of the alternator 12, generating electric power with the normal power generation voltage (for example, 12V), is increased to the increased power generation voltage (for example, 14V). Then, after the time t1, a current flowing through the electric load 50 increases in response to an increase in the power generation voltage and as a result, the power generation current increases.

At a time t2 where the increase in the power generation current continues, the engine ECU 30 follows the step S103 in FIG. 2 and starts the engine stop control. Here, the power generation voltage and the power generation current of the alternator 12 increase between the time t1 to the time t2, and thus, at the time t2, a load torque (generation resistance) caused by the alternator 12 increases as compared to that in the normal case. After the time t2, the rotation speed of the engine 10 decreases rapidly due to the generation resistance of the alternator 12, and the rotation of the engine 10 is stopped at time t3. The power generation current of the alternator 12 reaches the maximum value immediately after the time t2, and then decreases rapidly with the rapid decrease in the rotation speed of the engine 10. The power generation current of the alternator 12 becomes zero at the time t3.

On the other hand, in the comparative example, until the time t2 at which the engine stop control is started, the power generation voltage of the alternator 12 is maintained constant at the normal voltage (for example, 12V) and the constant power generation current corresponding to the electric load 50 connected to the alternator 12 flows through the alternator 12.

After the engine stop control is started at the time t2, the load torque (the generation resistance) of the alternator 12 remains substantially the same as that in the normal case and thus the rotation speed of the engine 10 decreases slowly. Accordingly, the engine 10 continues rotating until the engine 10 is stopped at time t4, later than the time t3.

In FIGs, 3A and 3B, a time from the time t2 at which the engine stop control is started to the time at which the engine 10 is stopped in a case where the power generation current of the alternator 12 is increased to the increased power generation voltage according to the embodiment is shortened by almost half as compared to a case where the power generation current of the alternator 12 is maintained at the normal power generation voltage according to the comparative example.

As described above, when the power generation voltage of the alternator 12 is increased to the voltage higher than the power generation voltage in the normal case at least before the engine stop control is started, the generation resistance of the alternator 12 is increased and as a result, the engine 10 can be stopped quickly. Although the engine 10 is generally designed to have the resonance point in a rotation speed range that is equal to or lower than the idle rotation speed, quick stop of the engine 10 suppress the uncomfortable feeling held by the occupant of the vehicle. When the rotation speed of the engine 10 passes through the rotation speed corresponding to the resonance point, large vibration and noise may occur in the vehicle. However, the quick stop of the engine 10 reduces a period of time during which the vibration and noise continue and thereby suppresses the uncomfortable feeling held by the occupant. Particularly in the idle stop vehicle in which the engine 10 is repeatedly stopped and restarted, the uncomfortable feeling held by the occupant can be greatly suppressed.

In addition, if it takes long time before rotation of the engine 10 is stopped, various control processes (for example, a control process for shutting down the ECUs and a control process for starting the engine 10 after the idle stop control) to be performed in the vehicle after the engine 10 is stopped may not be started smoothly. For example, when the engine 10 is required to be started shortly after the engine 10 is stopped, such as when the engine 10 is stopped at a stop sign, in the idle stop vehicle, the engine start control may not be started immediately and the occupant may hold the uncomfortable feeling if it takes long time before the rotation of the engine 10 is stopped when the engine 10 is stopped. The above problem can be solved by increasing the power generation voltage of the alternator 12 to the voltage higher than the power generation voltage in the normal case when the engine 10 is stopped and thereby quickly stopping the engine 10, as in the engine control apparatus 1 according to the embodiment.

In addition, the power generation voltage of the alternator 12 in the normal case can be set in consideration of the rated voltage of the electric load 50 and efficiency of the engine 10 (deterioration in fuel efficiency caused by the power generation resistance). Thus, the engine 10 can be stopped quickly while maintaining the other performance.

In the example shown in FIGs. 3A and 3B, the engine stop request is output in a state where the alternator 12 generates electric power with the power generation voltage in the normal case. However, if the power generation voltage has been already set at a voltage higher than the normal voltage when the engine stop request is output, then the set voltage may be maintained.

As described above, the engine ECU 30 may increase the power generation voltage of the alternator 12 to the voltage higher than the power generation voltage in the normal case when the vehicle decelerates. According to this configuration, the power generation voltage generated by regeneration during vehicle deceleration sufficiently exceeds the voltage across the terminals of the battery 20, and thus the battery 20 can be efficiently charged with regenerative electric power during vehicle deceleration. As a result, fuel efficiency of the vehicle can be improved. In this case, the idle stop ECU 40 outputs the engine stop request to the engine ECU 30 when the vehicle stops after deceleration and the predetermined engine stop condition is satisfied. At this time, the engine ECU 30 may maintain the power generation voltage that has been already set at the voltage higher than the power generation voltage in the normal case. According to this configuration, as in the example shown FIGs. 3A and 3B, the engine 10 can be stopped quickly and uncomfortable feeling held by the occupant of the vehicle can be suppressed. Also, it is possible to avoid making control complicated since the power generation voltage set during deceleration can be used in the engine stop control. As in the example shown in FIG 3A, the power generation voltage of the alternator 12 may be further increased to a voltage (for example, 16V) higher than the power generation voltage (for example, 14V) during deceleration.

In the example shown in FIG 3A, the engine stop control is started immediately after the engine stop request (including the off signal from the ignition switch) is received from the idle stop ECU 40. As described above, however, the engine ECU 30 is not allowed to stop the engine 10 immediately in some cases. In view of such a situation, the engine ECU 30 may increase the power generation voltage of the alternator 12 to the increased power generation voltage higher than the normal power generation voltage after the engine ECU 30 determines that the engine 10 is allowed to be stopped following reception of the engine stop request (the off signal). According to this configuration, the power generation voltage of the alternator 12 is increased when the engine 10 is to be certainly stopped. Thus, it is possible to avoid deterioration in fuel efficiency caused by the increase in the power generation resistance. Particularly when the engine 10 is not allowed to stop immediately in response to the engine stop request, such as when the vehicle is stopped at a stop sign, it is likely that the engine start request is output before the engine 10 is stopped and thus the engine 10 may not be stopped. In this case, the power generation voltage of the alternator 12 is not increased to the increased power generation voltage higher than the normal power generation voltage.

Hereinbefore, the embodiment for carrying out the invention is described in detail. The invention is not limited to the specific embodiment and various changes or modifications can be applied within the scope of the invention, described in claims.

In the above embodiment, the power generation current may be further increased by, for example, changing the settings of the electric load 50 and the generation resistance of the alternator 12 when the engine 10 is stopped may be further increased in order to stop the engine 10 more quickly. Specifically, in a case where the electric load 50 includes an electric load in which an energization current is varied while the same applied voltage is maintained, the electric load may be controlled such that the energization current is maximized in addition to the control for increasing the power generation voltage of the alternator 12 to the increased power generation voltage. More specifically, if the electric load is an electric load in which the energization current varies in response to an on-off operation of a switch, the power generation current of the alternator 12 may be further increased by turning on the switch of the electric load, in addition to the control for increasing the power generation voltage of the alternator to the increased power generation voltage.

## Claims

1. An engine control apparatus for controlling an engine (10) that drives a vehicle, the vehicle including:
a power generator (12) that is driven by the engine (10), wherein a power generation voltage generated by the power generator (12) is variable; and
an electric load (50) that is connected to the power generator (12) and driven with an electric power supplied by the power generator (12), wherein a current flowing through the electric load (50) increases as a voltage applied to the electric load (50) increases, the engine control apparatus **characterized by** comprising
a control unit (30) that stops the engine (10) in response to an engine stop request for stopping the engine (10) and increases the power generation voltage to a voltage higher than the power generation voltage in a normal case at least before the control unit (30) starts stopping the engine (10).

2. The engine control apparatus according to claim 1, wherein the control unit (30) increases the power generation voltage to the voltage higher than the power generation voltage in the normal case in response to the engine stop request.

3. The engine control apparatus according to claim 1, wherein:
the vehicle has a start-stop function for stopping the engine (10) automatically when a predetermined engine stop condition is satisfied;
the control unit (30) increases the power generation voltage to a voltage higher than the power generation voltage in the normal case during deceleration of the vehicle; and
when the predetermined engine stop condition is satisfied after the vehicle stops, the control unit (30) maintains the power generation voltage at the voltage during the deceleration before the vehicle stops.

4. The engine control apparatus according to claim 1 or 2, wherein:
the control unit (30) determines, in response to the engine stop request, whether the engine (10) is allowed to be stopped; and
when it is determined that the engine is allowed to be stopped, the control unit increases (30) the power generation voltage to the voltage higher than the power generation voltage in the normal case.

5. The engine control apparatus according to any one of claims 1 to 4, wherein the power generation voltage is maintained substantially constant in the normal case.

6. The engine control apparatus according to any one of claims 1 to 5, wherein the power generation voltage in the normal case is a voltage that corresponds to a rated voltage of the electric load (50).

7. An engine control method for controlling an engine (10) that drives a vehicle, the vehicle including:
a power generator (12) that is driven by the engine (10), wherein a power generation voltage generated by the power generator (12) is variable; and
an electric load (50) that is connected to the power generator (12) and driven with an electric power supplied by the power generator (12), wherein a current flowing through the electric load (50) increases as a voltage applied to the electric load (50) increases, the engine control method characterized comprising:
stopping the engine (10) in response to an engine stop request for stopping the engine (10); and
increasing the power generation voltage to a voltage higher than the power generation voltage in a normal case at least before the stopping of the engine (10) is started.
